# EUROPÄISCHE PATENTSCHRIFT

(11) **EP 3 212 543 B1**
(45) Veröffentlichungstag und Bekanntmachung des Hinweises auf die Patenterteilung: **30.11.2022**
(21) Anmeldenummer: 15784356.6
(22) Anmeldetag: 21.10.2015
(51) Int. Cl.: B65G 23/08

(54) **FÖRDEREINRICHTUNG FÜR FÖRDERANLAGEN, MODULARES SYSTEM UND VERFAHREN ZUM HERSTELLEN EINER SOLCHEN FÖRDEREINRICHTUNG**
CONVEYOR DEVICE FOR CONVEYOR INSTALLATIONS, A MODULAR SYSTEM, AND A METHOD FOR PRODUCING SUCH A CONVEYOR DEVICE
DISPOSITIF DE TRANSPORT DESTINÉ À UNE INSTALLATION DE TRANSPORT, SYSTÈME MODULAIRE ET PROCÉDÉ DE FABRICATION DUDIT DISPOSITIF DE TRANSPORT

(30) Priorität: 30.10.2014 DE 102014222171
(43) Veröffentlichungstag der Anmeldung: 06.09.2017
(73) Patentinhaber: Interroll Holding AG, 6592 Sant' Antonino (CH)
(72) Erfinder: TIEDEMANN, Hauke, 50765 Köln (DE)
(74) Vertreter: Kohlhof, Stephan
(86) Internationale Anmeldenummer: PCT/EP2015/074372
(87) Internationale Veröffentlichungsnummer: WO 2016/066495

(56) Entgegenhaltungen:
- WO-A1-2014/057984
- WO-A2-2013/000006

## Beschreibung

Die Erfindung betrifft eine Fördereinrichtung, insbesondere eine Förderrolle, für Förderanlagen zum Fördern von Behältern, Paletten und dergleichen oder Schüttgut, einem Trommelrohr, welches sich entlang einer Längsachse erstreckt und ein erstes Ende und ein zweites, dem ersten Ende gegenüberliegendes Ende aufweist, und einer elektrischen Antriebseinheit, welche ausgebildet ist, ein Förderdrehmoment von einer ersten Achse auf das Trommelrohr auszuüben. Die Erfindung betrifft ferner ein modulares System für den Aufbau einer Fördereinrichtung gewünschter Länge sowie ein Verfahren zur Herstellung einer solchen Fördereinrichtung.

Fördereinrichtungen dieser Bauart werden für unterschiedliche Zwecke in logistischen Anwendungen eingesetzt. Eine erfindungsgemäße Fördereinrichtung kann beispielsweise ein Trommelmotor oder eine Motorrolle mit einem Trommelkörper sein. Unter Trommelkörper ist dementsprechend auch ein Trag- oder Außenrohr einer Motorrolle bzw. ein Rollenkörper zu verstehen.

Trommelmotoren werden beispielsweise dazu eingesetzt, um in einem Gestell mittels einer Achse montiert zu werden, die dann orts- und drehmomentfest am Gestell befestigt ist. Der an einer Achse drehbar gelagerte Trommelkörper wird mittels einer innerhalb des Trommelkörpers liegenden Antriebseinheit angetrieben und in Rotation versetzt. Die Antriebseinheit stützt sich über die Achse ab und ist abtriebsseitig mit dem Trommelkörper verbunden. Der Trommelmotor kann dazu dienen, mittels eines Riemens oder dergleichen andere Einrichtungen anzutreiben, beispielsweise eine aus mehreren Förderrollen bestehende Förderstrecke. Weiterhin kann der Trommelmotor unmittelbar als Förderglied in eine Förderstrecke eingesetzt sein und das Fördergut tragen und durch die Rotation des Trommelkörpers fördern. Eine bevorzugte Anwendung besteht darin, den Trommelmotor in einer Förderbandstrecke als endseitiges Antriebselement einzusetzen und ein Förderband in teilweiser Umschlingung um den Trommelkörper zu führen und dieses durch die Rotation des Trommelkörpers in Bewegung zu versetzen. Eine weitere Anwendung besteht darin, den Trommelmotor mittig im Untertrum als Antriebselement einzusetzen, das Förderband wird hierzu in teilweiser Umschlingung um den Trommelkörper geführt.

Trommelmotoren sind im Stand der Technik in unterschiedlichen Antriebsleistungen vorbekannt. Diese Antriebsleistungen reichen von etwa 10 W bis 6 KW und können über den Trommelkörper ein Drehmoment bis zu 1000 Nm übertragen. Trommelmotoren zeichnen sich dabei bauartbedingt durch die spezifische Problematik einer schwierigen Wärmeabfuhr der Verlustwärme der Antriebseinrichtung aus, die für die kompakte Bauform innerhalb des Trommelkörpers angeordnet ist. Bei einigen Trommelmotoren hoher Leistungsklassen hat sich daher eine Ölfüllung des Trommelkörpers im Stand der Technik bewährt, um die thermische Stabilität des Trommelmotors auch bei hoher Last sicher zu stellen. Grundsätzlich kann aber aufgrund höherer Wirkungsgrade auf eine solche Ölfüllung auch bei Einsatz entsprechender Komponenten in einigen Fällen verzichtet werden. Aus der DE 20 2012 000 793 U1 ist ein getriebeloser elektrischer Trommelmotor bekannt, welcher mehrere elektrische Statorwicklungen und einen gemeinsamen permanent erregten Rotor oder eine gleiche Anzahl mechanisch verbundener permanent erregter Rotorreihen aufweist. Die einzelnen elektrischen Statorwicklungen sind elektrisch und mechanisch derart verbunden, dass sie einzeln oder gemeinsam zugeschaltet werden können, um die Leistung des Trommelmotors an einen Lastbedarf anzupassen.

Motorrollen für Rollenantriebe sind gegenüber den Trommelmotoren regelmäßig mit einem - hier als Trommelrohr bezeichneten Trommelkörper mit kleinerem Durchmesser ausgerüstet und weisen typischerweise eine Leistung von weniger als 100 W auf, typisch 10 bis 40 W. Solche Rollenantriebe werden dazu eingesetzt, um in Rollenförderstrecken Fördergüter zu tragen und zu befördern. Die Rollenförderer können dabei mit mehreren parallel angeordneten Leerlaufrollen kombiniert werden, die gegebenenfalls über einen Riemenantrieb oder Kettenantrieb von der motorbetriebenen Förderrolle angetrieben werden. In Kurvenrollenförderern sind die Rollen mit zueinander abgewinkelten Achsen ausgeführt.

So können die Trommelmotoren und Rollenantriebe beispielsweise in der Palettenförderung, bei der Förderung von Paketen in Paketversandzentren, zur Förderung von Behältern in Lagern unterschiedlicher Art oder zum Gepäcktransport in Flughäfen und in zahlreichen anderen Anwendungen eingesetzt werden. WO 2013/000006 A2 offenbart eine Förderrolle, welche eine stillstehende Rollenachse, Statorwicklungen eines Motors, welche mit der Rollenachse drehfest verbunden sind, und eine Steuerelektronik für den genannten Motor umfasst, welche mit der Rollenachse drehfest verbunden ist. Diese vorbekannte Förderrolle weist weiterhin einen drehbar um die Rollenachse gelagerten Rollenmantel auf, welcher drehfest mit einem Rotor des genannten Motors verbunden ist.

Der Erfindung liegt die Erkenntnis zugrunde, dass Fördereinrichtungen in Abhängigkeit des Einsatzgebietes, beispielsweise je nach Größe des Förderguts oder der räumlichen Gegebenheiten, in unterschiedlichen Längen hergestellt werden müssen. Gemäß dem Stand der Technik ist die Herstellung von Fördereinrichtungen unterschiedlicher Länge nur dann wirtschaftlich, wenn ein begrenztes Sortiment an Fördereinrichtungen mit diskret unterschiedlichen Längen angeboten wird. Individuelle Kundenwünsche, was die Länge einer Fördereinrichtung betrifft, sind nach dem Stand der Technik ausschließlich mit hohem Produktionsaufwand zu erfüllen, indem individuelle Förderrollengrößen konstruiert werden müssen. Diese Problematik tritt allgemein und insbesondere bei Ersatzlieferungen für defekte Rollen oder bei kleinen Ergänzungslieferungen auf.

Es ist daher Aufgabe der vorliegenden Erfindung, eine Fördereinrichtung der eingangs genannten Art bereitzustellen bzw. herzustellen, die einfach und ohne besonderen Herstellungsaufwand mit individueller Länge bereitstellbar ist.

Diese Aufgabe wird erfindungsgemäß gelöst durch Vorrichtungen und Verfahren gemäß der Ansprüche 1, 9 und 12.

Das Trommelrohr ist vorzugsweise hohlzylinderförmig ausgebildet und besteht aus einem Material, welches ein individuelles Zuschneiden des Trommelrohrs auf eine gewünschte Länge ermöglicht und gleichzeitig eine ausreichende Festigkeit für die Anwendung der Fördereinrichtung in Förderanlagen aufweist. Ein solches Material kann bevorzugt aus Stahl, Aluminium und/oder Kunststoff (z.B. PVC: Polyvinylchlorid) bestehen. Eine Innenfläche des Trommelrohrs ist vorzugsweise zylinderförmig ausgebildet.

Die Umfangsoberfläche des Kartuschenrohrs ist bevorzugt zylinderförmig ausgebildet und weist einen Außendurchmesser auf, welcher etwa dem Innendurchmesser des Trommelrohrs entspricht. Der Deckel deckt ein Ende des Kartuschenrohrs, vorzugsweise dichtend, ab und weist vorzugsweise einen Außendurchmesser auf, welcher größer als der Innendurchmesser des Trommelrohrs ist. Diese Abmessungen ermöglichen es, dass die Antriebskartusche bevorzugt durch das zweite Ende des Trommelrohrs in das Trommelrohr eingeschoben werden kann, bis der Deckel nach Art eines Flansches an dem zweiten Ende des Trommelrohrs anschlägt. Kartuschenrohr und Deckel können integral ausgebildet sein. Bevorzugt sind Kartuschenrohr und Deckel aus zwei Stücken gebildet sein.

Die Antriebseinheit umfasst bevorzugt einen Stator und einen Rotor. Die Antriebseinheit ist vorzugsweise koaxial zum Kartuschenrohr angeordnet. Die erste Achse ist drehmomentfest mit dem Stator verbunden. Unter "erste Achse" ist im Rahmen der vorliegenden Erfindung sowohl eine abstrakte Rotationsachse und bevorzugt ein Element des Deckel zu verstehen, welches beispielsweise mittels eines Wälzlagers drehbar um die Längsachse gelagert ist. Bevorzugt wird das Wälzlager von einem geölten oder gefetteten Präzisionskugellager nach DIN 625 (DIN: Deutsches Institut für Normung), beispielsweise aus Niro-Stahl gebildet. Die Achse des Deckels weist weiter vorzugsweise einen Durchgang auf, durch den sich eine Versorgungsleitung für die elektrische Antriebseinheit erstreckt. Der Durchgang wird bevorzugt von einer sich in Längsrichtung erstreckenden Bohrung bzw. Ausnehmung der Achse gebildet, insbesondere einem zylinderförmigen Loch mit einem Durchmesser, welcher die Durchführung der Versorgungsleitung erlaubt. Dies ermöglicht es, eine konstruktiv besonders einfache und vorteilhafte Versorgung mit elektrischer Energie für die Antriebseinheit zu schaffen.

Der Rotor ist weiter vorzugsweise innerhalb des Stators angeordnet. Der Stator weist vorzugsweise Spulenwicklungen auf und wird von dem Kartuschenrohr umgeben, welches sich im Betrieb um den Stator herum dreht. Die Übertragung eines Drehmoments von dem Rotor auf das Kartuschenrohr und den Deckel erfolgt mittels eines Getriebes, insbesondere eines Stirnradgetriebes. Der Rotor weist bei den vorzugsweise eingesetzten Asynchronmotoren einen sogenannten Squirrel-Cage auf. Es kommen aber auch Synchronmotoren zum Einsatz, in deren Rotoren Permanentmagneten angeordnet sind.

Ein wesentlicher Vorteil der erfindungsgemäßen Fördereinrichtung liegt darin, dass eine einheitliche Antriebskartusche für die Herstellung von Fördereinrichtungen unterschiedlicher Länge verwendet werden kann. Ein Kerngedanke bei der Erfindung liegt in der Verwendung der gleichen, vorgefertigten Antriebskartusche für herzustellende Fördereinrichtungen unterschiedlicher Länge. Dabei sind weitere für die Herstellung der Fördereinrichtung erforderliche Elemente, wie beispielsweise das Trommelrohr, teilweise unterschiedlich ausgestaltet. Der Begriff "Antriebskartusche" ist dabei als ein Element zu verstehen, dessen Abmessungen bei unterschiedlichen Fördereinrichtungen gleich bleibt und welches für den Aufbau der Fördereinrichtung in Trommelrohre unterschiedlicher Länge eingesetzt wird. Synonym kann auch der Begriff "Antriebseinsatz" oder "Antriebspatrone" verwendet werden.

Gemäß einer bevorzugten Ausführungsform der erfindungsgemäßen Fördereinrichtung erstreckt sich der Deckel in das Kartuschenrohr und weist in einem Flanschabschnitt außerhalb des Kartuschenrohrs einen Außendurchmesser auf, welcher dem Außendurchmesser des Trommelrohrs entspricht.

Der Deckel besteht bevorzugt aus zwei Abschnitten, nämlich dem Flanschabschnitt und einem Einführabschnitt. Der Flanschabschnitt deckt das zweite Ende des Kartuschenrohrs dichtend ab. Im montierten Zustand der Fördereinrichtung deckt der Flanschabschnitt das zweite Ende des Trommelrohrs ab. Der Einführabschnitt des Deckels ragt bevorzugt in einen Innenraum des Kartuschenrohrs und weist einen Außendurchmesser auf, der eine Übermaßpassung des Einführabschnitts in dem Kartuschenrohr schafft. Der Deckel bildet bevorzugt ein Element der vorgefertigten Antriebskartusche.

Der Deckel kann an seiner Stirnseite ein oder mehrere Öllöcher aufweisen, die sich durch den Deckel in das Kartuschenrohr erstrecken. Die Öllöcher dienen zur Einfuhr von Öl in den oder Entfernung von Öl aus dem Innenraum des Trommelrohrs.

Bei der erfindungsgemäßen Fördereinrichtung weist die drehmomentfeste Verbindung zwischen Kartuschenrohr und Trommelrohr eine Übermaßpassung zwischen Außendurchmesser des Kartuschenrohrs und Innendurchmesser des Trommelrohrs auf oder wird von dieser Übermaßpassung gebildet. Unter "Übermaßpassung" (Presspassung) ist bevorzugt zu verstehen, dass der Außendurchmesser des Kartuschenrohrs dem Innendurchmesser des Trommelrohrs entspricht oder sogar geringfügig größer als der Innendurchmesser des Trommelrohrs ist. Dieses Größenverhältnis wird derart gewählt, dass das Kartuschenrohr in das Trommelrohr während der Herstellung eingepresst werden kann, jedoch im Betrieb der Fördereinrichtung eine drehmomentfeste Verbindung zwischen Kartuschenrohr und Trommelrohr besteht.

Gemäß einer bevorzugten Fortbildung der vorstehend beschriebenen Ausführungsform weist die drehmomentfeste Verbindung zwischen Kartuschenrohr und Trommelrohr eine Klebverbindung auf. So kann beispielsweise ein Klebstoff zwischen einer Außenoberfläche des Kartuschenrohrs und einer Innenoberfläche des Trommelrohrs vorgesehen sein.

In einer weiteren bevorzugten Ausführungsform der erfindungsgemäßen Fördereinrichtung weist das Kartuschenrohr an einem Ende einen Einsatzdeckel auf, welcher mittels eines Wälzlagers auf einer zweiten Achse drehbar gelagert ist, wobei die zweite Achse an einer Stirnseite des Kartuschenrohrs eine Ausnehmung zur Aufnahme eines Achsstummels aufweist. Bevorzugt wird der Einsatzdeckel an einem Ende in das Kartuschenrohr eingesteckt, welches gegenüberliegend zu dem Ende, an welches sich der Flanschabschnitt anschließt, liegt. D.h. die Stirnseite ist eine dem Deckel abgewandte Seite. Die Ausnehmung ist bevorzugt zur drehmomentfesten Aufnahme des Achsstummels ausgebildet. Dies kann durch eine passgenaue Aufnahme bzw. eine Übermaßpassung des Achsstummels in der Ausnehmung erfolgen. Die Ausnehmung wird vorzugsweise von einem Sackloch in der zweiten Achse gebildet, welches drehsymmetrisch um die Längsachse geformt ist. Unter "zweite Achse" ist im Rahmen der vorliegenden Erfindung sowohl eine abstrakte Rotationsachse und bevorzugt ein Element des Einsatzdeckels zu verstehen, welches mittels des Wälzlagers drehbar um die Längsachse gelagert ist. Bevorzugt wird das Wälzlager von einem geölten oder gefetteten Präzisionskugellager nach DIN 625, beispielsweise aus Niro-Stahl gebildet.

Gemäß einer Fortbildung der vorstehend beschriebenen Ausführungsform erstrecken sich das Kartuschenrohr und der Einsatzdeckel durch das Trommelrohr von dem ersten bis zu dem zweiten Ende des Trommelrohrs, wobei der Achsstummel aus dem ersten Ende des Trommelrohrs herausragt. Hierzu weist das Trommelrohr eine Länge auf, die der Gesamtlänge von Kartuschenrohr und Einsatzdeckel in Längsrichtung entspricht. Dabei bildet der Einsatzdeckel gleichzeitig eine stirnseitige Abdeckung des Trommelrohrs, wobei der Achsstummel aus dem Einsatzdeckel und somit aus dem Trommelrohr herausragt. Diese Fortbildung stellt die kürzeste Fördereinrichtung dar, welche erfindungsgemäß herstellbar ist. Erfindungsgemäß bildet folglich die Länge der Antriebskartusche eine untere Grenze für eine Fördereinrichtungslänge. D.h. das Trommelrohr bildet die äußere Umfangsoberfläche der Fördereinrichtung, z.B. zur Förderung von Behältern, Paletten und dergleichen. An einem Ende der Fördereinrichtung ragt die erste Achse in Richtung der Längsachse zur Lagerung der Fördereinrichtung in einem Fördergestell heraus. An einem anderen Ende der Fördereinrichtung ragt der Achsstummel in Längsachsenrichtung zur Lagerung der Fördereinrichtung in einem Fördergestell heraus. Mit anderen Worten: Die gemäß dieser Fortbildung geschaffene Fördereinrichtung ist im Betrieb an ihrem ersten Ende mittels des Achsstummels und an ihrem zweiten Ende mittels der ersten Achse in einem Fördergestell drehbar gelagert. Die aus den Enden der Fördereinrichtung herausragenden Abschnitte des Achsstummels und der ersten Achse sind bevorzugt als Schlüsselflächenachse ausgebildet, welche an den Achsenden seitliche, parallele Abfräsungen aufweisen. Diese Schlüsselflächenachsen passen in entsprechende Profile mit offenen Langlöchern.

Nach einer weiteren bevorzugten Ausführungsform der erfindungsgemäßen Fördereinrichtung weist das Trommelrohr an dem ersten Ende einen Trommelrohrdeckel auf, welcher mittels eines Wälzlagers auf einer dritten Achse drehbar gelagert ist, wobei die dritte Achse zur Durchführung des Achsstummels ausgebildet ist und ein Ende des Achsstummels aus dem Trommelrohrdeckel herausragt. Der Trommelrohrdeckel weist bevorzugt einen Einführabschnitt und einen Flanschabschnitt auf. Der Einführabschnitt wird in das Trommelrohr eingeführt, bis der Flanschabschnitt an dem ersten Ende des Trommelrohrs anschlägt. Unter "dritte Achse" ist im Rahmen der vorliegenden Erfindung sowohl eine abstrakte Rotationsachse und bevorzugt ein Element des Trommelrohrdeckels zu verstehen, welches beispielsweise mittels eines Wälzlagers drehbar um die Längsachse gelagert ist. Bevorzugt wird das Wälzlager von einem geölten oder gefetteten Präzisionskugellager nach DIN 625, beispielsweise aus Niro-Stahl, gebildet. Die Achse weist weiter bevorzugt einen Durchgang auf, insbesondere ein zylinderförmiges Loch, durch den sich der Achsstummel im montierten Zustand erstreckt. Bevorzugt weist der Achsstummel in einem Teilbereich einen Außendurchmesser auf, der eine passgenaue Durchführung durch den Durchgang ermöglicht, so dass quer zur Längsrichtung auf den Achsstummel wirkenden Kräften entgegengewirkt wird. Weiter bevorzugt ist der Achsstummel drehmomentfest mit der dritten Achse verbunden. Der Durchgang wird bevorzugt von einer sich in Längsrichtung erstreckenden Bohrung bzw. Ausnehmung der Achse gebildet, insbesondere einem zylinderförmigen Loch mit einem Durchmesser, der dem Außendurchmesser des Achsstummels in dem Teilbereich entspricht.

Gemäß einer Fortbildung der vorstehend beschriebenen Ausführungsform erstreckt sich der Achsstummel im montierten Zustand durch die dritte Achse und ragt zur Aufnahme in die Ausnehmung der zweiten Achse hinein. Damit wird eine Ausführungsform geschaffen, die insbesondere für mittlere Längen von Fördereinrichtungen gemäß der vorliegenden Erfindung vorgesehen ist. Dabei weist das Trommelrohr eine Länge auf, die größer als die Länge des Kartuschenrohrs ist. Bei diesen Längen reicht die Länge des Achsstummels aus, um sich durch die dritte Achse im Trommelrohrdeckel zu erstrecken und in die zweite Achse im Einsatzdeckel hineinzuragen. Durch diesen Aufbau erfährt der Achsstummel eine Stabilisierung sowohl durch die Durchführung in der dritten Achse als auch durch die, bevorzugt passgenaue Aufnahme in der zweiten Achse.

Gemäß einer Weiterbildung der vorstehend beschriebenen Fortbildung der Fördereinrichtung weist der Achsstummel in einem Zwischenabschnitt zwischen dem Trommelrohrdeckel und dem Einsatzdeckel einen Durchmesser auf, welcher im montierten Zustand die Aufnahme des Zwischenabschnitts jeweils in die erste und/oder zweite Achse verhindert. Damit wird ein Abstandshalter zwischen Trommelrohrdeckel und Einsatzdeckel geschaffen, indem der Durchmesser des Achsstummels quer zur Längsachse gemessen größer ist als jeweils der Durchmesser der Durchführung in der dritten Achse und/oder der Durchmesser der Ausnehmung in der zweiten Achse. Gleichzeitig wird ein einfacher Zusammenbau der Fördereinrichtung ermöglicht. So kann der Zwischenabschnitt als Anschlag für das Einführen des Achsstummels in die Ausnehmung der zweiten Achse dienen. Gleichzeitig kann der Zwischenabschnitt als Anschlag zum Einführen des Trommelrohrdeckels in das Trommelrohr dienen. Schließlich ist es bevorzugt, dass die Abmessung des Zwischenabschnitts in Richtung der Längsachse derart ausgebildet ist, dass dieser Zwischenabschnitt einen Abstandshalter zwischen Kartuschenrohr und Trommelrohrdeckel schafft, bei dem sowohl das Kartuschenrohr der Antriebskartusche als auch der Einführabschnitt des Trommelrohrdeckels vollständig in das Trommelrohr eingeführt werden können, insbesondere bis zum Anschlagen des Deckelabschnitts der Antriebskartusche an das zweite Ende des Trommelrohrs und/oder bis zum Anschlagen des Flanschabschnitts des Trommelrohrdeckels an das ersten Ende des Trommelrohrs.

Gemäß einer alternativen Fortbildung der vorstehend beschriebenen Ausführungsform weist die Fördereinrichtung ein Einsatzelement auf, welches zur Aufnahme in das Trommelrohr ausgebildet ist und auf einer vierten Achse drehbar gelagert ist, wobei die vierte Achse zur Aufnahme des Achsstummels ausgebildet ist, und wobei der Achsstummel sich im montierten Zustand durch die dritte Achse erstreckt und in die vierte Achse hineinragt. Damit wird eine Ausführungsform für Fördereinrichtungen mit vergleichsweise großer Länge geschaffen. Das Einsatzelement kann beispielsweise einen Außendurchmesser aufweisen, welcher etwa dem Innendurchmesser des Trommelrohrs entspricht oder geringfügig größer als dieser ist (Übermaßpassung), wobei das Einsatzelement drehmomentfest, beispielsweise durch Übermaßpassung oder Klebverbindung, in dem Trommelrohr eingeführt ist. Weiter bevorzugt ist das Einsatzelement benachbart zum Trommelrohrdeckel innerhalb des Trommelrohrs angeordnet. Die vierte Achse weist vorzugsweise eine Sacklochausnehmung oder weiter vorzugsweise eine Durchgangsausnehmung auf, in welche sich der Achsstummel hinein erstreckt. In Längsachsenrichtung gesehen ausgehend von dem Einsatzelement erstreckt sich der Achsstummel durch den Trommelrohrdeckel hindurch und ragt aus dem Trommelrohrdeckel an dem ersten Ende des Trommelrohrs heraus. Das Einsatzelement kann gemäß dieser Fortbildung beliebig von dem Kartuschenrohr in Längsachsenrichtung beabstandet sein, soweit die Stabilität des Trommelrohrs dies zulässt. Folglich können gemäß dieser Fortbildung Fördereinrichtungen vergleichsweise großer Länge geschaffen werden.

Die eingangs genannte Aufgabe wird gemäß einem weiteren Aspekt der Erfindung gelöst durch ein modulares System gemäß dem Gegenstand des Anspruchs 9.

Weiter bevorzugt umfasst das modulare System mehrere Trommelrohre unterschiedlicher Länge. Die unterschiedlichen Elemente des modularen Systems können wahlweise, je nach gewünschter Fördereinrichtungslänge zu einer Fördereinrichtung zusammengefügt werden. Noch weiter bevorzugt umfasst das modulare System mehrere Achsstummel unterschiedlicher Ausführung. Insbesondere für Fördereinrichtungen kleinster und mittlerer Länge ist der Achsstummel zur Aufnahme in die zweite Achse ausgebildet. Für Fördereinrichtungen großer Länge ist der Achsstummel zur Aufnahme in die vierte Achse ausgebildet.

Nach einer bevorzugten Ausführungsform des modularen Systems ist für den Aufbau einer Fördereinrichtung kleinster Länge das Trommelrohr vorgesehen, welches eine Länge aufweist, die im Wesentlichen der Länge des Kartuschenrohrs entspricht, und der Achsstummel vorgesehen, welcher im montierten Zustand in der Ausnehmung der zweiten Achse aufgenommen ist,
wobei für den Aufbau einer Fördereinrichtung mittlerer Länge zumindest der Trommelrohrdeckel vorgesehen ist, wobei der Achsstummel im montierten Zustand in der Ausnehmung der zweiten Achse des Einsatzdeckels aufgenommen ist und sich durch die dritte Achse erstreckt und aus dem Trommelrohrdeckel herausragt und/oder
wobei für den Aufbau einer Fördereinrichtung großer Länge zumindest der Trommelrohrdeckel und das Einsatzelement vorgesehen sind, wobei sich der Achsstummel im montierten Zustand durch die dritte Achse des Trommelrohrdeckels erstreckt und zur Aufnahme in die vierte Achse hineinragt.

Bevorzugt ist der Achsstummel für den Aufbau einer Fördereinrichtung kleinster Länge drehmomentfest in der Ausnehmung der zweiten Achse aufgenommen. Weiter bevorzugt ist für den Aufbau einer Fördereinrichtung mittlerer Länge der Achsstummel im montierten Zustand drehmomentfest in der Ausnehmung der zweiten Achse aufgenommen. Außerdem ragt für den Aufbau einer Fördereinrichtung großer Länge der Achsstummel im montierten Zustand bevorzugt zur drehmomentfesten Aufnahme in die vierte Achse hinein.

Mit anderen Worten: Ist eine Fördereinrichtung mit kleinstmöglicher Länge gewünscht, wird ein Trommelrohr verwendet, welches der Länge des Kartuschenrohrs entspricht. Darunter ist auch eine Länge zu verstehen, die geringfügig größer als die Länge des Kartuschenrohrs ist, nämlich die Gesamtlänge von Kartuschenrohr und dem Flanschabschnitt des Einsatzdeckels. Dabei kann der Achsstummel von dem Kartuschenrohr aufgenommen werden und ragt somit aus dem Trommelrohr heraus. Für den Aufbau einer Fördereinrichtung, deren Länge größer als die des Kartuschenrohrs ist, wird zusätzlich ein Trommelrohrdeckel benötigt. Je nach Länge der Fördereinrichtung kann sich der Achsstummel durch eine Ausnehmung in der dritten Achse des Trommelrohrdeckels hindurch und in die zweite Achse des Einsatzdeckels hinein erstrecken. Bei vergleichsweise langen Fördereinrichtungen ist ein zusätzliches Einsatzelement vorgesehen, welches mit seiner vierten Achse den Achsstummel, insbesondere drehmomentfest, aufnimmt, welcher durch die dritte Achse des Trommelrohrdeckels und dann aus dem Trommelrohrdeckel herausragt. Das Einsatzelement schafft eine zusätzliche Stabilisierung des Achsstummels gegenüber quer zur Längsrichtung wirkenden Kräften.

Gemäß der vorstehend beschriebenen Ausführungsform des modularen Systems werden für den Aufbau von Fördereinrichtungen individueller Länge die folgenden Elemente benötigt:
- eine einheitliche Antriebskartusche;
- drei verschiedene Achsstummel;
- ein auf eine gewünschte Länge zuschneidbares Trommelrohr;
- ein Trommelrohrdeckel; und
- ein Einsatzelement.

Gemäß einem weiteren Aspekt der Erfindung wird die eingangs genannten Aufgabe gelöst durch ein Verfahren gemäß dem gegenstand des Anspruchs 11.

Das erfindungsgemäße Verfahren zeichnet sich dadurch aus, dass mit einer überschaubaren Anzahl von Verfahrensschritten, die jeweils handwerklich einfache Prozessschritte umfassen, Fördereinrichtungen individueller Länge hergestellt werden können. Das Bereitstellen eines Trommelrohrs gewünschter Länge erfolgt bevorzugt dadurch, dass ein Trommelrohr-Rohling auf eine gewünschte Länge zugeschnitten wird. Bei Ausführungsformen, in welchen das Trommelrohr die Außenumfangsfläche der Fördereinrichtung bildet, entspricht die Länge des Trommelrohrs im Wesentlichen der Länge der herzustellenden Fördereinrichtung. Bei einer Fördereinrichtung geringster Länge, entspricht die Länge der Fördereinrichtung im Wesentlichen der Länge des Kartuschenrohrs zuzüglich der Länge des Deckelabschnitts. Bei einer Fördereinrichtung mittlerer und großer Länge entspricht die Länge der Fördereinrichtung im Wesentlichen der Länge des Trommelrohrs zuzüglich der Länge des Deckelabschnitts und der Länge des aus dem Trommelrohr herausragenden Flanschabschnitts des Trommelrohrdeckels.

Gemäß einer bevorzugten Ausführungsform des erfindungsgemäßen Verfahrens umfasst dieses die weiteren Schritte:
d) Einführen eines Einsatzdeckels in das Kartuschenrohr an einem Ende, insbesondere vor dem Einführen des Kartuschenrohrs in das Trommelrohr, wobei der Einsatzdeckel mittels eines Wälzlagers auf einer zweiten Achse drehbar gelagert ist, wobei die zweite Achse an einer Stirnseite des Kartuschenrohrs eine Ausnehmung zur Aufnahme eines Achsstummels aufweist, und
e) Einführen des Achsstummels in die Ausnehmung der zweiten Achse.

Die vorstehend genannten Verfahrensschritte dienen insbesondere für die Herstellung einer Fördereinrichtung kleinster Länge. Die einzelnen Schritte können in beliebiger Reihenfolge durchgeführt werden oder sich zeitlich überlagern. Schritt d) kann sowohl vor als auch nach dem Schritt c) erfolgen, bevorzugt jedoch vor dem Schritt c). Schritt e) kann vor oder nach Schritt c) und/oder Schritt d) durchgeführt werden, bevorzugt jedoch nach dem Schritt d) und vor dem Schritt c). Bevorzugt wird das Kartuschenrohr in ein Trommelrohr eingeführt, welches eine Länge aufweist, die der Länge des Kartuschenrohrs entspricht. In diesem Fall ragt der Achsstummel nach dem Einführen in die Ausnehmung der zweiten Achse und nach dem Einführen des Kartuschenrohrs in das Trommelrohr aus dem Trommelrohr an seinem ersten Ende heraus. Die nach diesem Verfahren hergestellte Fördereinrichtung kann dann mittels des Achsstummels und der aus dem Deckelabschnitt herausragenden ersten Achse in einem Fördergestell drehbar gelagert verwendet werden.

Nach einer weiteren bevorzugten Ausführungsform des erfindungsgemäßen Verfahrens ist ein Trommelrohrdeckel auf einer dritten Achse gelagert, wobei die dritte Achse zur Durchführung eines Achsstummels ausgebildet ist, wobei das Verfahren die weiteren Schritte aufweist:
f) Einführen eines Einsatzdeckels in das Kartuschenrohr an einem Ende, insbesondere vor dem Einführen des Kartuschenrohrs in das Trommelrohr, wobei der Einsatzdeckel auf einer zweiten Achse drehbar gelagert ist, wobei die zweite Achse an einer Stirnseite des Kartuschenrohrs eine Ausnehmung zur Aufnahme des Achsstummels aufweist,
g) Einführen des Trommelrohrdeckels in das Trommelrohr an dem ersten Ende des Trommelrohrs,
h) Durchführen des Achsstummels durch die dritte Achse, und
i) Einführen des Achsstummels in die Ausnehmung der zweiten Achse.

Die vorstehend genannten Verfahrensschritte dienen insbesondere zur Herstellung einer Fördereinrichtung mittlerer Länge. Die einzelnen Schritte können in beliebiger Reihenfolge durchgeführt werden oder sich zeitlich überlagern. Insbesondere die Schritte g), h) und i) können in beliebiger Reihenfolge durchgeführt werden. Bevorzugt überlagern sich die Schritte h) und i) zeitlich, das heißt während der Achsstummel durch die dritte Achse durchgeführt wird, gelangt ein Ende des Achsstummels in die Ausnehmung der zweiten Achse und wird in diese eingeführt. Alternativ zu der genannten Reihenfolge ist es auch möglich, dass nach dem Schritt f) zunächst der Achsstummel in die Ausnehmung der zweiten Achse eingeführt wird. Während der Trommelrohrdeckel in das Trommelrohr eingeführt wird, wird der Achsstummel gleichzeitig durch die dritte Achse durchgeführt. Der Achsstummel ist unabhängig von der Reihenfolge der vorstehend genannten Schritte g), h) und i) derart ausgebildet, dass er im montierten Zustand aus dem Trommelrohrdeckel herausragt. So kann die hergestellte Fördereinrichtung mittels des Achsstummels und der aus dem Deckelabschnitt herausragenden ersten Achse auf einem Fördergestell zur Verwendung gelagert werden.

Gemäß einer weiteren bevorzugten Ausführungsform des erfindungsgemäßen Verfahrens ist ein Trommelrohrdeckel auf einer dritten Achse gelagert, wobei die dritte Achse zur Durchführung eines Achsstummels ausgebildet ist, wobei das Verfahren weiter die Schritte umfasst:
j) Einführen eines Einsatzelements in das Trommelrohr, wobei das Einsatzelement auf einer vierten Achse drehbar gelagert ist und die vierte Achse eine Ausnehmung zur Aufnahme eines Achsstummels aufweist,
k) Einführen des Trommelrohrdeckels in das Trommelrohr an dem ersten Ende des Trommelrohrs,
I) Durchführen des Achsstummels durch die dritte Achse, und
m) Einführen des Achsstummels in die Ausnehmung der vierten Achse.

Die vorstehend genannten Verfahrensschritte dienen bevorzugt zur Herstellung einer Fördereinrichtung großer Länge. Die einzelnen Schritte können in beliebiger Reihenfolge durchgeführt werden oder sich zeitlich überlagern. Schritt j) schließt sich bevorzugt an Schritt c) an oder wird vor dem Schritt c) durchgeführt. Die Schritte k), I) und m) können in beliebiger Reihenfolge durchgeführt werden. Die Schritte I) und m) können sich zudem zeitlich überlagern, d.h. während der Achsstummel durch die dritte Achse durchgeführt wird, gelangt ein Ende des Achsstummels in die Ausnehmung der vierten Achse und wird in diese eingeführt. Alternativ zu der vorstehend genannten Reihenfolge kann der Achsstummel nach dem Schritt j) in die Ausnehmung der vierten Achse eingeführt werden, woraufhin der Trommelrohrdeckel in das Trommelrohr eingeführt und gleichzeitig der Achsstummel durch die dritte Achse durchgeführt wird. Der Achsstummel ist derart ausgebildet, dass er im montierten Zustand aus dem Trommelrohrdeckel herausragt.

Bevorzugte Ausführungsformen der Erfindung werden beispielhaft anhand der beiliegenden Figuren beschrieben. Es zeigen:
- Fig. 1:: eine seitliche Querschnittsansicht eines Ausführungsbeispiels einer erfindungsgemäßen Antriebskartusche;
- Fig. 2:: eine Draufsicht der in Fig. 1 gezeigten Antriebskartusche;
- Fig. 3:: eine perspektivische Ansicht einer Teil-Querschnittsansicht der in Fig. 1 gezeigten Antriebskartusche;
- Fig. 4:: eine seitliche Teil-Querschnittsansicht der in den Figuren 1 bis 3 gezeigten Antriebskartusche mit Achsstummel;
- Fig. 5:: eine Draufsicht der in Fig. 4 gezeigten Antriebskartusche;
- Fig. 6:: eine perspektivische Ansicht einer Teil-Querschnittsansicht der in Fig. 4 gezeigten Antriebskartusche;
- Fig. 7:: eine seitliche Teil-Querschnittsansicht eines ersten Ausführungsbeispiels einer erfindungsgemäßen Fördereinrichtung;
- Fig. 8:: eine Draufsicht der in Fig. 7 gezeigten Fördereinrichtung;
- Fig. 9:: eine perspektivische Ansicht einer Teil-Querschnittsansicht der in Fig. 7 gezeigten Fördereinrichtung;
- Fig. 10:: eine seitliche Teil-Querschnittsansicht eines zweiten Ausführungsbeispiels einer erfindungsgemäßen Fördereinrichtung;
- Fig. 11:: eine Draufsicht der in Fig. 10 gezeigten Fördereinrichtung; und
- Fig. 12:: eine perspektivische Ansicht einer Teil-Querschnittsansicht der in Fig. 10 gezeigten Fördereinrichtung.

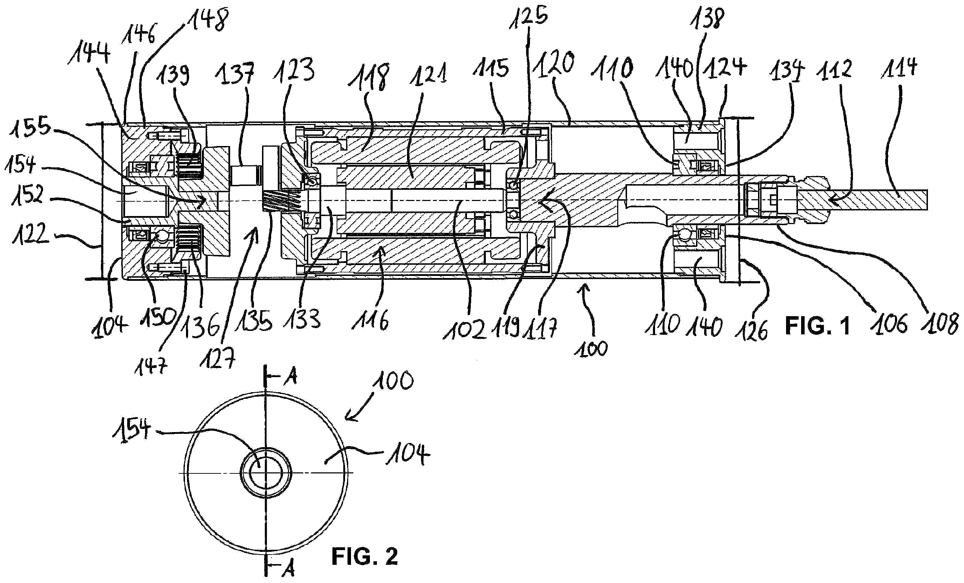

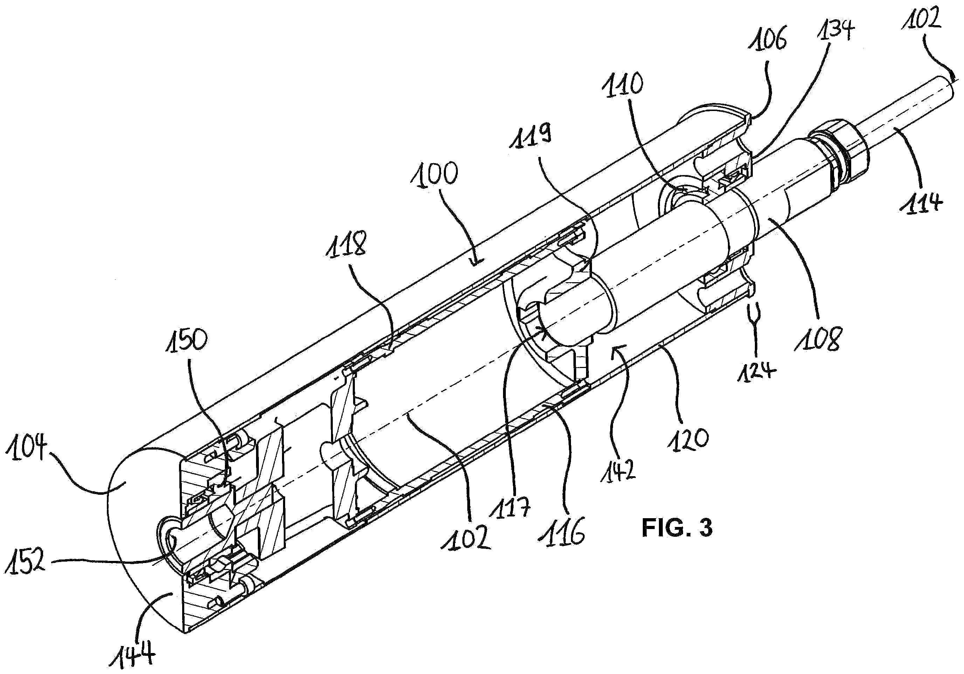

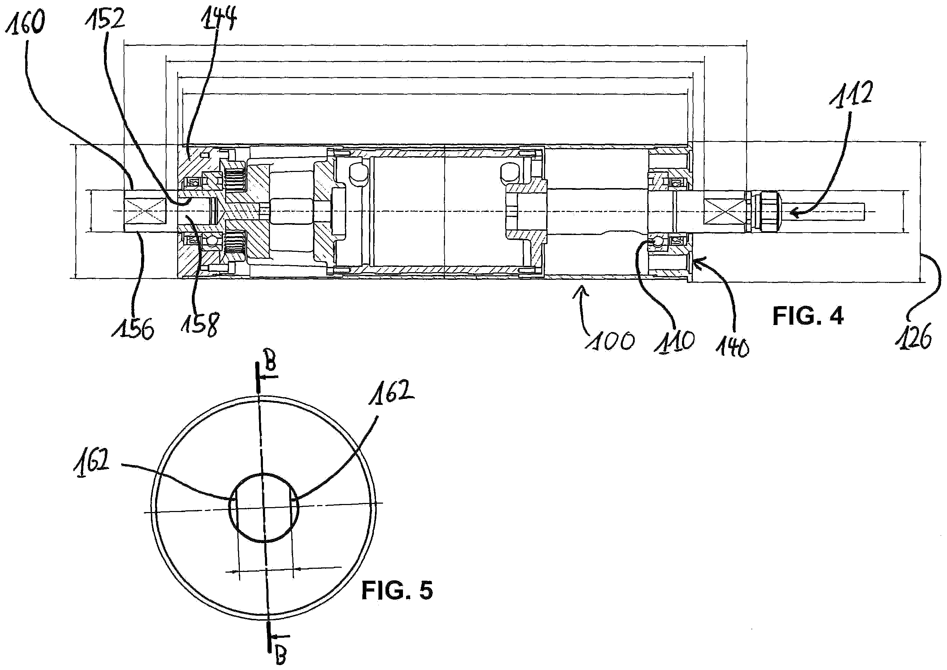

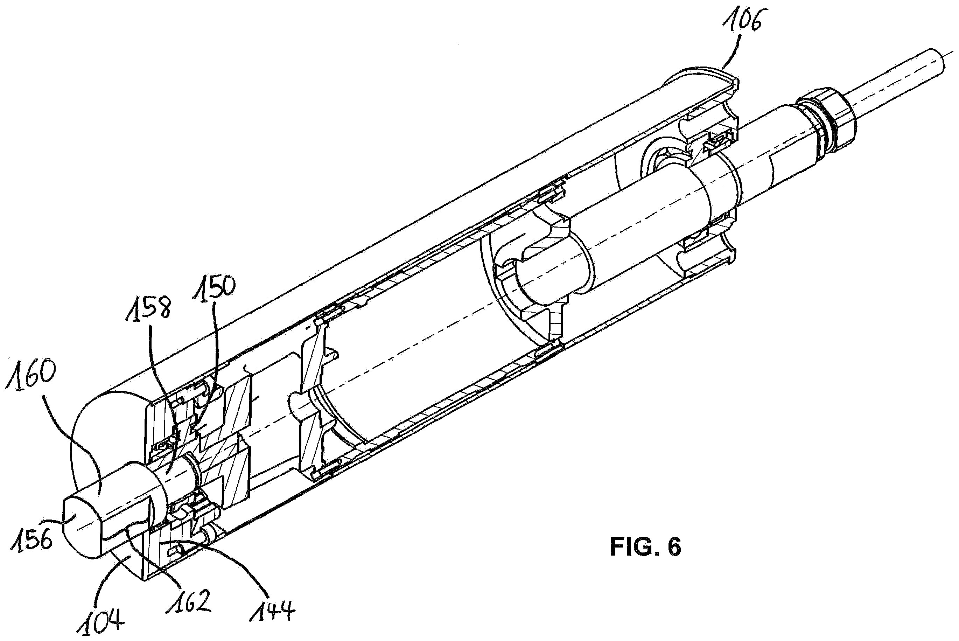

Die in den Figuren 1 bis 5 dargestellte Antriebskartusche 100 ist in den Figuren 1 und 3 bzw. in den Figuren 4 und 6 in einer Schnittansicht gezeigt, wobei die Schnittebene jeweils in der in Fig. 2 gezeigten Linie A-A bzw. der in Fig. 5 gezeigten Linie B-B liegt. Die Antriebskartusche 100 erstreckt sich jeweils entlang einer Längsachse 102 zwischen einem ersten Ende 104 und einem zweiten Ende 106. Fig. 2 zeigt eine Draufsicht auf das erste Ende 104 der Antriebskartusche 100 in Richtung der Längsachse 102 betrachtet.

Die Antriebskartusche 100 ist auf einer ersten Achse 108 mittels eines Wälzlagers 110 drehbar um die Längsachse 102 gelagert. Die erste Achse 108 weist einen Durchgang 112 auf, durch den sich eine Versorgungsleitung 114 zur Versorgung einer elektrischen Antriebseinheit 116 mit elektrischer Energie erstreckt. Die erste Achse 108 und die Versorgungsleitung 114 sind im Betrieb statisch in einer nicht gezeigten Förderanlage gelagert.

Die Antriebskartusche 100 weist ein Kartuschenrohr 120 auf, welches eine zylindrische Umfangsoberfläche mit einem ersten Durchmesser 122 aufweist und sich entlang der Längsachse 102 erstreckt. Das Kartuschenrohr 120 erstreckt sich von dem ersten Ende 104 bis zu einem Flanschabschnitt 124 eines Deckels 134, wobei der Flanschabschnitt 124 einen zweiten Durchmesser 126 aufweist, welcher größer als der erste Durchmesser 122 ist. Das Kartuschenrohr 120 und der Deckel 134 der Antriebskartusche 100 befinden sich im Betrieb in der Regel in Rotation um die Längsachse 102. Innerhalb des Kartuschenrohrs 120 ist die Antriebseinheit 116 koaxial mit dem Kartuschenrohr 120 angeordnet. Die Antriebseinheit 116 wird mittels der Versorgungsleitung 114 mit elektrischer Energie versorgt. Die Antriebseinheit 116 weist ein Statorgehäuse 115 mit einem darin angeordneten Stator 118 auf, welcher drehmomentfest mit der ersten Achse 108 gekoppelt ist. Die Kopplung zwischen erster Achse 108 und Stator 118 erfolgt durch eine drehmomentfeste Aufnahme der ersten Achse 108 in einer Ausnehmung 117 eines Deckels 119 des Statorgehäuses 115. Die Antriebseinheit 116 weist außerdem einen Rotor 121 auf, welcher vom Stator 118 und dem Statorgehäuse 115 umgeben ist. Der Rotor 121 ist drehmomentfest mit einer Rotorwelle 133 verbunden. Die Rotorwelle 133 ist mittels zweier Wälzlager 123, 125 drehbar in dem Statorgehäuse 115 gelagert und ragt in ein Stirnradgetriebe 127. In einem Endbereich der Rotorwelle 133 ist ein Schrägstirnrad 135 ausgebildet, welches ein Drehmoment auf ein weiteres Rad (nicht gezeigt) überträgt. Mittels einer Welle 137 wird das Drehmoment auf ein Zahnrad 139 übertragen. Das Zahnrad 139 greift in einen nach innenverzahnten Zahnkranz 136. Der Zahnkranz 136 ist drehmomentfest mit dem Kartuschenrohr 120 verbunden. Auf diese Weise wird das Drehmoment des Rotors 121 auf das Kartuschenrohr 120 übertragen.

Ein Einführabschnitt 138 des Deckels 134 ragt in das Kartuschenrohr 120 derart hinein, dass eine Außenfläche des Einführabschnitts 138 drehmomentfest mit einer Innenfläche des Kartuschenrohrs 120 verbunden ist. Der Deckel 134 weist Öllöcher 140 auf, welche sich von dem ersten Ende 106 der Antriebskartusche 100 in einen Innenraum 142 des Kartuschenrohrs 120 erstrecken.

Im Bereich des ersten Endes 104 ist ein Einsatzdeckel 144 angeordnet, welcher einen Flanschabschnitt 146 und einen Einführabschnitt 148, der in das Kartuschenrohr 120 hineinragt, aufweist. Der Zahnkranz 136 ist mittels einer Schraubverbindung 147 fest mit dem Einführabschnitt 148 verbunden. Der Einsatzdeckel 144 ist mittels eines Wälzlagers 150 drehbar um die Längsachse 102 auf einer zweiten Achse 152 gelagert. Ein Sackloch 154 bildet eine Ausnehmung in der zweiten Achse 152. Das Sackloch 154 ist zur Aufnahme eines in den Fig. 4 bis 6 gezeigten Achsstummels 156 ausgebildet. Die Achse 152 ist drehmomentfest mit dem Statorgehäuse 115 verbunden. Dazu ragt die Achse 152 in eine Ausnehmung 155 des Statorgehäuses drehmomentfest hinein.

Die Fig. 4 bis 6 zeigen die in den Fig. 1 bis 3 dargestellte Antriebskartusche 100 zusammen mit dem Achsstummel 156. Der Achsstummel 156 enthält einen Einführabschnitt 158, welcher zur Aufnahme in das Sackloch 154 bemessen ist. Zudem enthält der Achsstummel 156 einen Lagerungsabschnitt 160, welcher zur drehmomentfesten Lagerung einer mittels der Antriebskartusche 100 hergestellten Fördereinrichtung in einem Fördergestell (nicht gezeigt) bemessen ist. Hierzu weist der Lagerungsabschnitt 160 in Teilbereichen eine zylinderförmige Umfangsoberfläche auf, die zur drehmomentfesten Aufnahme in dem Fördergestell abgeflachte, ebene Abfräsungen 162 aufweist.

Für die Herstellung einer Fördereinrichtung kann ein Trommelrohr (nicht gezeigt) auf das Kartuschenrohr 120 aufgeschoben werden bzw. das Kartuschenrohr 120 in ein Trommelrohr eingeführt werden. Das Trommelrohr hat eine Länge, die der Gesamtlänge von Kartuschenrohr 120 und Flanschabschnitt 148 bei eingesetztem Einsatzdeckel 144 entspricht. Das Einführen des Kartuschenrohrs 120 in das Trommelrohr kann vor oder nach dem Einführen des Achsstummels 156 in das Sackloch 154 erfolgen.

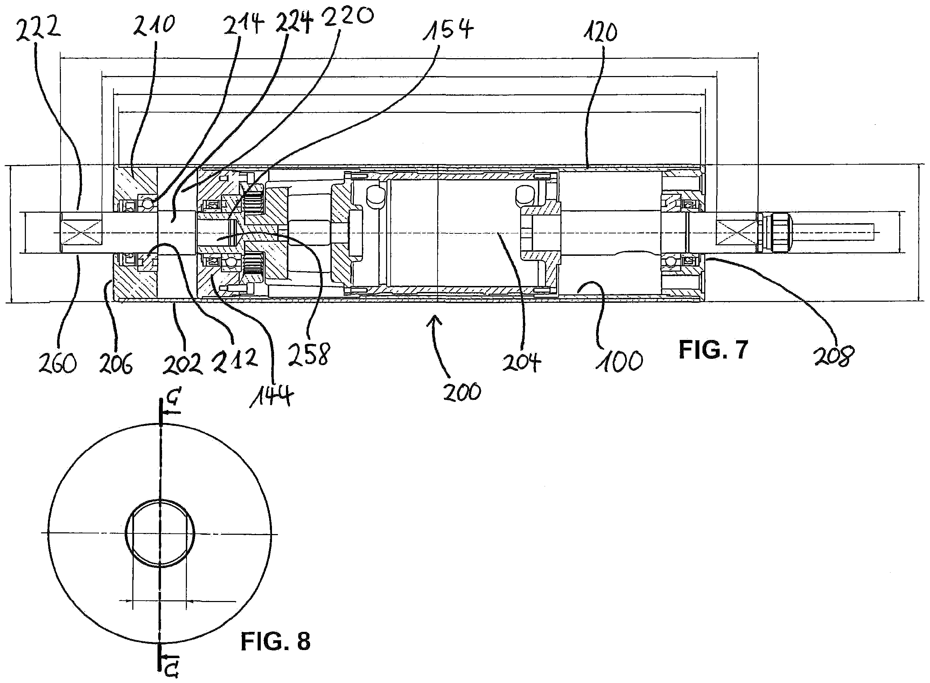

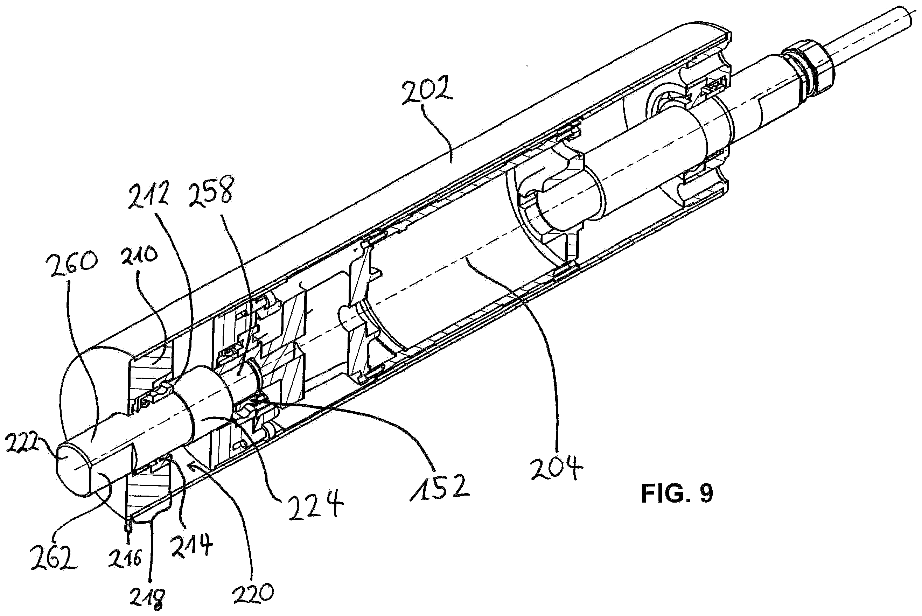

Die Figuren 7 bis 9 zeigen ein erstes Ausführungsbeispiel einer erfindungsgemäßen Fördereinrichtung 200. Bei der in den Figuren 7 und 9 gezeigten Teil-Schnittansicht liegt die Schnittebene in der in Fig. 8 gezeigten Linie C-C. Die Fördereinrichtung 200 enthält die in den Figuren 1 bis 3 gezeigte Antriebskartusche 100. Gleiche Elemente der Antriebskartusche werde hierbei mit denselben Bezugszeichen versehen.

Fig. 7 zeigt ein Trommelrohr 202, welches sich entlang einer Längsachse 204 erstreckt und ein erstes Ende 206 und ein zweites Ende 208 aufweist, welches dem ersten Ende 206 des Trommelrohrs 202 in Richtung der Längsachse 204 gegenüberliegt. An ihrem ersten Ende 206 weist die Fördereinrichtung 200 einen Trommelrohrdeckel 210 auf, welcher auf einer dritten Achse 212 mittels eines Wälzlagers 214 drehbar um die Längsachse 204 gelagert ist. Der Trommelrohrdeckel 210 weist einen Flanschabschnitt 216 und einen Einführabschnitt 218 auf. Im montierten Zustand ragt der Einführabschnitt 218 in einen Innenraum 220 des Trommelrohrs 202 hinein. Der Flanschabschnitt 216 bildet eine Abdeckung des ersten Endes 206 des Trommelrohrs 202. Die dritte Achse 212 schafft eine Durchführung für einen Achsstummel 222. Der Achsstummel 222 weist einen Einführabschnitt 258 auf, welcher zur Aufnahme in das Sackloch 154 ausgebildet ist. Hierzu entspricht der Innendurchmesser des Sacklochs 154 dem Außendurchmesser des Einführabschnitts 258. Ein Zwischenabschnitt 224 des Achsstummels 222 weist einen Außendurchmesser auf, welcher größer als der Innendurchmesser des Sacklochs 154 und der Durchführung der dritten Achse 212 ist. Der Zwischenabschnitt 224 schließt sich in Längsrichtung an den Einführabschnitt 258 an und ist im montierten Zustand zwischen dem Einsatzdeckel 144 und dem Trommelrohrdeckel 210 angeordnet. Ein Lagerungsabschnitt 260 des Achsstummels 222 erstreckt sich durch die Durchführung der dritten Achse 212 und weist in einem Teilbereich eine im Wesentlichen zylindrische Umfangsoberfläche auf. In einem Endbereich des Lagerungsabschnitts 260 sind abgeflachte, ebene Abfräsungen 262 vorgesehen, die zur drehmomentfesten Lagerung des Lagerungsabschnitts 260 in einem Fördergestell (nicht gezeigt) dienen.

Die in den Fig. 7 bis 9 gezeigte Antriebskartusche 100 erstreckt sich ausgehend von dem zweiten Ende 208 des Trommelrohrs in den Innenraum 220 des Trommelrohrs hinein. Dabei liegt eine Außenfläche des Kartuschenrohrs 120 an einer Innenfläche des Trommelrohrs an. Eine drehmomentfeste Verbindung zwischen Kartuschenrohr 120 und dem Trommelrohr 202 wird zum einen durch eine Übermaßpassung gebildet. Das heißt der Außendurchmesser des Kartuschenrohrs 120 ist geringfügig größer als der Innendurchmesser des Trommelrohrs 202, sodass das Kartuschenrohr 120 in das Trommelrohr 202 eingeführt werden kann mit einer Kraft, die betragsmäßig größer als der Betrag eines maximalen in Drehrichtung wirkenden Kraft am Übergang zwischen Kartuschenrohr 120 und Trommelrohr 202 im Betrieb der Fördereinrichtung ist. Auf diese Weise wird eine drehmomentfeste Verbindung zwischen Kartuschenrohr 120 und Trommelrohr 202 für den Betrieb geschaffen. Zudem wird die drehmomentfeste Verbindung zwischen Kartuschenrohr 120 und Trommelrohr 202 durch einen Klebstoff zwischen der Außenfläche des Kartuschenrohrs 120 und der Innenfläche des Trommelrohrs 202 geschaffen.

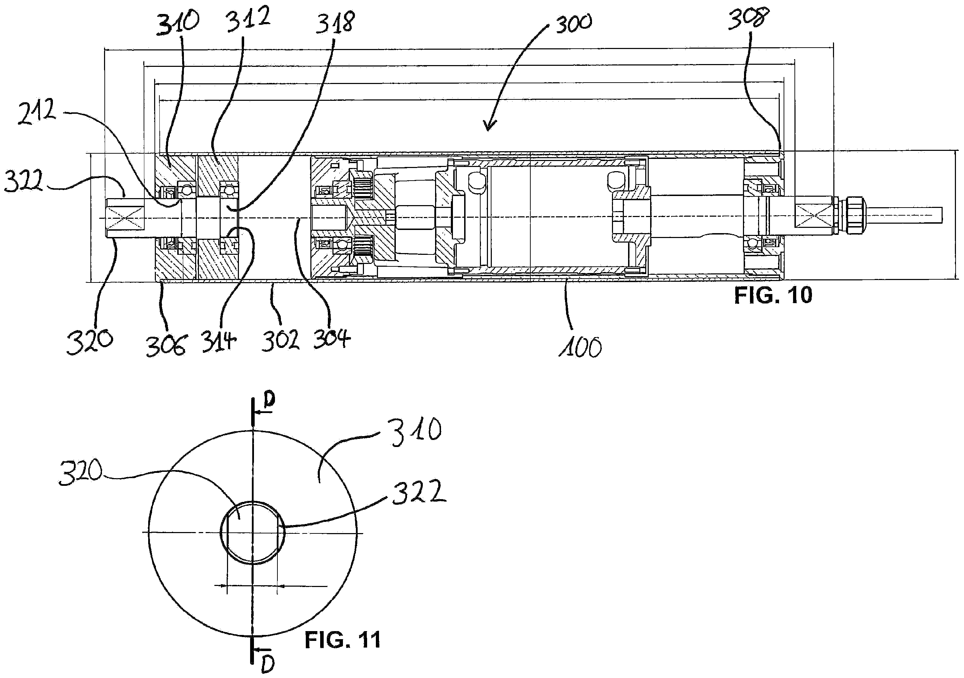

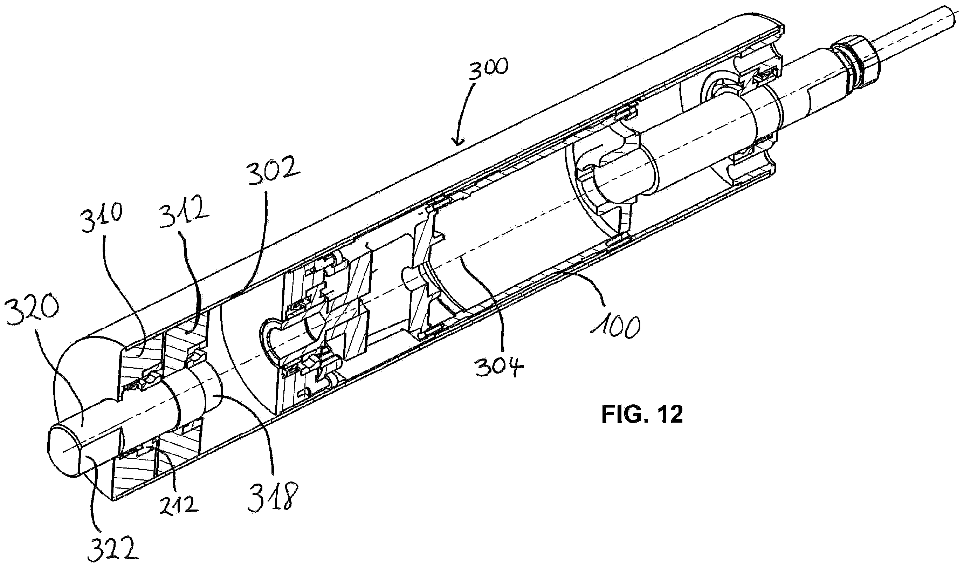

Die Fig. 10 bis 12 zeigen ein zweites Ausführungsbeispiel einer erfindungsgemäßen Fördereinrichtung 300, insbesondere für den Aufbau von Fördereinrichtungen großer Länge. Bei der in den Figuren 10 und 12 gezeigten Teil-Schnittansicht liegt die Schnittebene in der in Fig. 11 gezeigten Linie D-D. Die in den Figuren 10 bis 12 gezeigte Antriebskartusche 100 entspricht der in den Figuren 1 bis 9 gezeigten Antriebskartusche. Gleiche Elemente sind dabei mit denselben Bezugszeichen versehen.

Ein Trommelrohr 302 erstreckt sich entlang einer Längsachse 304 und weist ein erstes Ende 306 und ein zweites Ende 308 auf. Ein Trommelrohrdeckel 310 entspricht dem Aufbau nach dem in den Figuren 7 bis 9 gezeigten Trommelrohrdeckel 210. Gleiche Elemente sind dabei mit denselben Bezugszeichen versehen. Ein Einsatzelement 312 ist innerhalb des Trommelrohrs 302 benachbart zu dem Trommelrohrdeckel 310 angeordnet. Das Einsatzelement 312 ist drehbar um die Längsachse 304 auf einer vierten Achse 314 gelagert. Die vierte Achse 314 weist eine Durchführung auf, in die ein Einführabschnitt 318 eines Achsstummels 320 drehmomentfest aufgenommen wird. Der Achsstummel 320 erstreckt sich durch die Durchführung der dritten Achse 212 und ragt mit einem Lagerungsabschnitt 322 aus dem Trommelrohrdeckel 310 heraus. Der Lagerungsabschnitt 322 dient zur Lagerung der Fördereinrichtung 300 in einem Fördergestell. Die äußere Form des Lagerungsabschnitts 322 entspricht der äußeren Form des Lagerungsabschnitts 160 bzw. 260, wie er in den Figuren 4 bis 6 bzw. 7 bis 9 gezeigt ist. Das in den Figuren 10 bis 12 gezeigte zweite Ausführungsbeispiel einer erfindungsgemäßen Fördereinrichtung ist besonders geeignet für den Aufbau von Fördereinrichtungen großer Länge. Das Einsatzelement 312 dient zur Stabilisierung des Achsstummels 320 gegenüber Kräften, die quer zur Längsachse 304 wirken. Ein wesentlicher Unterschied des zweiten Ausführungsbeispiels im Vergleich zu dem ersten Ausführungsbeispiel ist, dass das Trommelrohr eine Länge aufweist, bei der es konstruktiv sinnvoll ist, das Einsatzelement 312 vorzusehen - anstatt eines Achsstummels, der sich wie in den Figuren 7 bis 8 gezeigt durch den Trommelrohrdeckel 210 erstreckt und in das Sackloch 154 der zweiten Achse 152 hineinragt. Stattdessen ragt ein dem Lagerungsabschnitt 322 abgewandtes Ende des Achsstummels in die Durchführung der vierten Achse 314.

### Bezugszeichen

- 100: Antriebskartusche
- 102: Längsachse
- 104: erstes Ende
- 106: zweites Ende
- 108: erste Achse
- 110: Wälzlager
- 112: Durchgang
- 114: Versorgungsleitung
- 115: Statorgehäuse
- 116: Antriebseinheit
- 117: Ausnehmung
- 118: Stator
- 119: Statorgehäusedeckel
- 120: Kartuschenrohr
- 121: Rotor
- 122: erster Durchmesser
- 123: Wälzlager
- 124: Flanschabschnitt
- 125: Wälzlager
- 126: zweiter Durchmesser
- 127: Stirnradgetriebe
- 132: Rotor
- 134: Deckel
- 135: Schrägstirnrad
- 136: Zahnkranz
- 137: Welle
- 138: Einführabschnitt
- 139: Zahnrad
- 140: Öllöcher
- 142: Innenraum
- 144: Einsatzdeckel
- 146: Flanschabschnitt
- 147: Schraubverbindung
- 148: Einführabschnitt
- 150: Wälzlager
- 152: zweite Achse
- 154: Sackloch
- 155: Ausnehmung
- 156: Achsstummel
- 158: Einführabschnitt
- 160: Lagerungsabschnitt
- 162: ebene Ausnehmungen
- 200: Fördereinrichtung
- 202: Trommelrohr
- 204: Längsachse
- 206: erstes Ende
- 208: zweites Ende
- 210: Trommelrohrdeckel
- 212: dritte Achse
- 214: Wälzlagers
- 216: Flanschabschnitt
- 218: Einführabschnitt
- 220: Innenraum
- 222: Achsstummel
- 224: Zwischenabschnitt
- 258: Einführabschnitt
- 260: Lagerungsabschnitt
- 262: Ausnehmungen
- 300: Fördereinrichtung
- 302: Trommelrohr
- 304: Längsachse
- 306: erstes Ende
- 308: zweites Ende
- 310: Trommelrohrdeckel
- 312: Einsatzelement
- 314: vierte Achse
- 318: Einführabschnitt
- 320: Achsstummel
- 322: Lagerungsabschnitt

## Patentansprüche

1. Fördereinrichtung (200; 300) für Förderanlagen zum Fördern von Behältern, Paletten und dergleichen oder Schüttgut, mit
- einem Trommelrohr (202; 302), welches sich entlang einer Längsachse (204; 304) erstreckt und ein erstes Ende (206; 306) und ein zweites, dem ersten Ende gegenüberliegendes Ende (208; 308) aufweist, und
- einer elektrischen Antriebseinheit (116), welche ausgebildet ist, ein Förderdrehmoment von einer ersten Achse (108) auf das Trommelrohr auszuüben,
- einer Antriebskartusche (100), mit
∘ einem Kartuschenrohr (120), welches drehmomentfest und koaxial im Trommelrohr (202; 302) befestigt ist, und
∘ einem Deckel (134), welcher auf der ersten Achse (108) drehbar gelagert ist und ein Ende des Kartuschenrohrs abdeckt,
wobei die elektrische Antriebseinheit innerhalb des Kartuschenrohrs angeordnet und das Kartuschenrohr koaxial innerhalb des Trommelrohrs befestigt ist.
**dadurch gekennzeichnet, dass**
eine drehmomentfeste Verbindung zwischen Kartuschenrohr (120) und Trommelrohr (202; 302) eine Übermaßpassung zwischen Außendurchmesser des Kartuschenrohrs (120) und Innendurchmesser des Trommelrohrs (202; 302) aufweist oder von dieser gebildet wird.

2. Fördereinrichtung nach Anspruch 1,
**dadurch gekennzeichnet, dass** der Deckel (134) sich in das Kartuschenrohr (120) erstreckt und in einem Flanschabschnitt (124) außerhalb des Kartuschenrohrs einen Außendurchmesser (126) aufweist, welcher dem Außendurchmesser des Trommelrohrs (202; 302) entspricht.

3. Fördereinrichtung nach Anspruch1 oder 2,
**dadurch gekennzeichnet, dass** die drehmomentfeste Verbindung zwischen Kartuschenrohr (120) und Trommelrohr (202; 302) eine Klebverbindung aufweist.

4. Fördereinrichtung nach einem der vorhergehenden Ansprüche,
**dadurch gekennzeichnet, dass** das Kartuschenrohr (120) an einem Ende (104) einen Einsatzdeckel (144) aufweist, welcher mittels eines Wälzlagers auf einer zweiten Achse (152) drehbar gelagert ist, wobei die zweite Achse (152) an einer Stirnseite des Kartuschenrohrs (120) eine Ausnehmung (154) zur Aufnahme eines Achsstummels (156; 222) aufweist.

5. Fördereinrichtung nach Anspruch 4,
**dadurch gekennzeichnet, dass** sich das Kartuschenrohr (120) und der Einsatzdeckel (144) durch das Trommelrohr von dem ersten bis zu dem zweiten Ende des Trommelrohrs erstrecken und der Achsstummel (156) aus dem ersten Ende des Trommelrohrs herausragt.

6. Fördereinrichtung nach einem der vorstehenden Ansprüche 1-4,
**dadurch gekennzeichnet, dass** das Trommelrohr (202; 302) an dem ersten Ende (206; 306) einen Trommelrohrdeckel (210; 310) aufweist, welcher mittels eines Wälzlagers auf einer dritten Achse (212) drehbar gelagert ist, wobei die dritte Achse (212) zur Durchführung des Achsstummels (222; 320) ausgebildet ist und ein Ende des Achsstummels (222; 320) aus dem Trommelrohrdeckel (210; 310) herausragt.

7. Fördereinrichtung nach Anspruch 6,
**dadurch gekennzeichnet, dass** der Achsstummel (222; 320) sich im montierten Zustand durch die dritte Achse (212) erstreckt und zur Aufnahme in die Ausnehmung (156) der zweiten Achse (152) hineinragt.

8. Fördereinrichtung nach Anspruch 7,
**dadurch gekennzeichnet, dass** der Achsstummel (222) in einem Zwischenabschnitt (224) zwischen dem Trommelrohrdeckel (210) und dem Einsatzdeckel (144) einen Durchmesser aufweist, welcher im montierten Zustand die Aufnahme des Zwischenabschnitts (224) jeweils in die zweite (152) und/oder dritte Achse (212) verhindert.

9. Fördereinrichtung nach Anspruch 6,
mit einem Einsatzelement (312), welches zur Aufnahme in das Trommelrohr (302) ausgebildet ist und mittels eines Wälzlagers auf einer vierten Achse (314) drehbar gelagert ist, wobei die vierte Achse (314) zur Aufnahme des Achsstummels (320) ausgebildet ist, und
wobei der Achsstummel (320) sich im montierten Zustand durch die dritte Achse (212) erstreckt und in die vierte Achse (314) hineinragt.

10. Modulares System für den Aufbau einer Fördereinrichtung (200; 300) gewünschter Länge, insbesondere einer Fördereinrichtung nach einem der vorstehenden Ansprüche, mit
- einem in einer gewünschten Länge herstellbaren Trommelrohr (202; 302) mit einem ersten Ende (206; 306) und einem zweiten, dem ersten Ende gegenüberliegenden Ende (208; 308),
einer Antriebskartusche (100) mit einem Kartuschenrohr (120), welches zur drehmomentfesten Aufnahme in das Trommelrohr (202; 302) ausgebildet ist, und einem Deckel (134), welcher auf einer ersten Achse (108) drehbar gelagert ist und ein Ende des Kartuschenrohrs (120) abdeckt, wobei koaxial innerhalb des Kartuschenrohrs (120) eine Antriebseinheit (116) zum Ausüben eines Förderdrehmoments von der ersten Achse (108) auf das Trommelrohr (202; 302) angeordnet ist, indem eine drehmomentfeste Verbindung zwischen Kartuschenrohr (120) und Trommelrohr (202; 302) eine Übermaßpassung zwischen Außendurchmesser des Kartuschenrohrs (120) und Innendurchmesser des Trommelrohrs (202; 302) aufweist oder von dieser gebildet wird.
- wobei das Kartuschenrohr (120) an einem Ende (104) einen Einsatzdeckel (144) aufweist, welcher mittels eines Wälzlagers auf einer zweiten Achse (152) drehbar gelagert ist, wobei die zweite Achse (152) an der Stirnseite des Kartuschenrohrs (120) eine Ausnehmung (154) zur drehmomentfesten Aufnahme eines Achsstummels (156; 222) aufweist, und
- wahlweise einem Trommelrohrdeckel (210; 310), welcher mittels eines Wälzlagers auf einer dritten Achse (214) drehbar gelagert ist, wobei die dritte Achse (214) zur Durchführung des Achsstummels (156; 222; 320) ausgebildet ist, und
- wahlweise einem Einsatzelement (312), welches zur Aufnahme in das Trommelrohr (302) ausgebildet ist und mittels eines Wälzlagers auf einer vierten Achse (314) drehbar gelagert ist, wobei die vierte Achse (314) zur Aufnahme des Achsstummels (320) ausgebildet ist.

11. Modulares System nach Anspruch 10,
- wobei für den Aufbau einer Fördereinrichtung kleinster Länge das Trommelrohr vorgesehen ist, welches eine Länge aufweist, die im Wesentlichen der Länge des Kartuschenrohrs (120) entspricht, und der Achsstummel (156) vorgesehen ist, welcher im montierten Zustand in der Ausnehmung (154) der zweiten Achse (152) aufgenommen ist,
- wobei für den Aufbau einer Fördereinrichtung (200) mittlerer Länge zumindest der Trommelrohrdeckel (210) vorgesehen ist, wobei der Achsstummel (222) im montierten Zustand in der Ausnehmung (154) der zweiten Achse (152) des Einsatzdeckels (144) aufgenommen ist und sich durch die dritte Achse (212) erstreckt und aus dem Trommelrohrdeckel (210) herausragt, und/oder
- wobei für den Aufbau einer Fördereinrichtung (300) großer Länge zumindest der Trommelrohrdeckel (310) und das Einsatzelement (312) vorgesehen sind, wobei sich der Achsstummel (320) im montierten Zustand durch die dritte Achse (212) des Trommelrohrdeckels (310) erstreckt und zur Aufnahme in die vierte Achse (314) hineinragt.

12. Verfahren zur Herstellung einer Fördereinrichtung (200; 300), insbesondere einer Fördereinrichtung nach einem der vorstehenden Ansprüche, mit den Schritten:
a) Bereitstellen eines Trommelrohrs (202; 302), welches sich entlang einer Längsachse (204; 304) erstreckt und ein erstes Ende (206; 306) und ein zweites, dem ersten Ende gegenüberliegendes Ende (208; 308) aufweist, wobei das Trommelrohr (202; 302) mit einer Länge in Abhängigkeit von der gewünschten Länge der Fördereinrichtung (200; 300) bereitgestellt wird,
- Bereitstellen einer Antriebskartusche (100) mit einem Kartuschenrohr (120), welches zur drehmomentfesten und koaxialen Aufnahme in das Trommelrohr (202; 302) ausgebildet ist, indem eine drehmomentfeste Verbindung zwischen Kartuschenrohr (120) und Trommelrohr (202; 302) eine Übermaßpassung zwischen Außendurchmesser des Kartuschenrohrs (120) und Innendurchmesser des Trommelrohrs (202; 302) aufweist oder von dieser gebildet wird.
b) und einem Deckel (134), welcher auf einer ersten Achse (108) drehbar gelagert ist und ein Ende des Kartuschenrohrs abdeckt, und
c) Einführen des Kartuschenrohrs (120) in das Trommelrohr (202; 302) durch das zweite Ende (208; 308), bis der Deckel (134) an das zweite Ende (208; 308) des Trommelrohrs (202; 302) anschlägt.

13. Verfahren nach Anspruch 12, mit den Schritten:
d) Einführen eines Einsatzdeckels (144) in das Kartuschenrohr (120) an einem Ende (104), insbesondere vor dem Einführen des Kartuschenrohrs (120) in das Trommelrohr, wobei der Einsatzdeckel (144) mittels eines Wälzlagers auf einer zweiten Achse (152) drehbar gelagert ist, wobei die zweite Achse (152) an einer Stirnseite des Kartuschenrohrs (120) eine Ausnehmung (154) zur Aufnahme eines Achsstummels (156) aufweist, und
e) Einführen des Achsstummels (156) in die Ausnehmung (154) der zweiten Achse (152).

14. Verfahren nach Anspruch 12, bei welchem ein Trommelrohrdeckel (210) auf einer dritten Achse (212) gelagert ist, wobei die dritte Achse (212) zur Durchführung eines Achsstummels (222) ausgebildet ist, mit den Schritten:
f) Einführen eines Einsatzdeckels (144) in das Kartuschenrohr (120) an einem Ende (104), insbesondere vor dem Einführen des Kartuschenrohrs (120) in das Trommelrohr (202), wobei der Einsatzdeckel (144) auf einer zweiten Achse (152) drehbar gelagert ist, wobei die zweite Achse (152) an einer Stirnseite des Kartuschenrohrs (120) eine Ausnehmung (154) zur Aufnahme des Achsstummels (222) aufweist,
g) Einführen des Trommelrohrdeckels (210) in das Trommelrohr (202) an dem ersten Ende (206) des Trommelrohrs (202),
h) Durchführen des Achsstummels (222) durch die dritte Achse (212), und
i) Einführen des Achsstummels (222) in die Ausnehmung (154) der zweiten Achse (152).

15. Verfahren nach Anspruch 12, bei welchem ein Trommelrohrdeckel (310) auf einer dritten Achse (212) gelagert ist, wobei die dritte Achse (212) zur Durchführung eines Achsstummels (320) ausgebildet ist, mit den Schritten:
j) Einführen eines Einsatzelements (312) in das Trommelrohr, wobei das Einsatzelement (312) auf einer vierten Achse (314) drehbar gelagert ist und die vierte Achse (314) eine Ausnehmung zur Aufnahme des Achsstummels (320) aufweist,
k) Einführen des Trommelrohrdeckels (310) in das Trommelrohr (302) an dem ersten Ende des Trommelrohrs (306),
I) Durchführen des Achsstummels (320) durch die dritte Achse (212), und
m) Einführen des Achsstummels (320) in die Ausnehmung der vierten Achse (314).

## Claims

1. Conveyor device (200; 300) for conveyor installations for conveying containers, pallets and the like or bulk materials, comprising
- a drum tube (202; 302), which extends along a longitudinal axis (204; 304) and has a first end (206; 306) and a second end (208; 308) opposite the first end, and
- an electric drive unit (116), which is designed to exert a conveying torque from a first shaft (108) onto the drum tube,
- a drive cartridge (100), having
o a cartridge tube (120), which is fixed torque-resistantly and coaxially in the drum tube (202; 302), and
o a cover (134), which is rotatably mounted on the first shaft (108) and covers one end of the cartridge tube,
wherein the electric drive unit is arranged within the cartridge tube and the cartridge tube is fixed coaxially within the drum tube,
**characterized in that**
a torque-resistant connection between the cartridge tube (120) and drum tube (202; 302) has or is formed by an interference fit between the external diameter of the cartridge tube (120) and the internal diameter of the drum tube (202; 302).

2. Conveyor device according to Claim 1, **characterized in that** the cover (134) extends into the cartridge tube (120) and, in a flange section (124) outside the cartridge tube, has an external diameter (126) which corresponds to the external diameter of the drum tube (202; 302).

3. Conveyor device according to Claim 1 or 2, **characterized in that** the torque-resistant connection between the cartridge tube (120) and the drum tube (202; 302) has an adhesive connection.

4. Conveyor device according to one of the preceding claims,
**characterized in that**, at one end (104), the cartridge tube (120) has an insert cover (144), which is rotatably mounted on a second shaft (152) by means of a rolling-contact bearing, wherein the second shaft (152) has a recess (154) in one end face of the cartridge tube (120) to receive a stub axle (156; 222).

5. Conveyor device according to Claim 4, **characterized in that** the cartridge tube (120) and the insert cover (144) extend through the drum tube from the first as far as the second end of the drum tube, and the stub axle (156) projects out of the first end of the drum tube.

6. Conveyor device according to one of the preceding Claims 1-4,
**characterized in that**, at the first end (206; 306), the drum tube (202; 302) has a drum tube cover (210; 310), which is rotatably mounted on a third shaft (212) by means of a rolling-contact bearing, wherein the third shaft (212) is designed for the stub axle (222; 320) to be led through, and one end of the stub axle (222; 320) projects out of the drum tube cover (210; 310).

7. Conveyor device according to Claim 6, **characterized in that** the stub axle (222; 320) extends through the third shaft (212) when assembled and projects into the recess (156) in the second shaft (152) to be received.

8. Conveyor device according to Claim 7, **characterized in that**, in an intermediate section (224) between the drum tube cover (210) and the insert cover (144), the stub axle (222) has a diameter which, when assembled, prevents the intermediate section (224) being received in the second (152) and/or third shaft (212), respectively.

9. Conveyor device according to Claim 6,
having an insert element (312), which is designed to be received in the drum tube (302) and is rotatably mounted on a fourth shaft (314) by means of a rolling-contact bearing, wherein the fourth shaft (314) is designed to receive the stub axle (320), and
wherein the stub axle (320) extends through the third shaft (212) when assembled and projects into the fourth shaft (314).

10. Modular system for the construction of a conveyor device (200; 300) of desired length, in particular a conveyor device according to one of the preceding claims, comprising
- a drum tube (202; 302) that can be produced in a desired length and has a first end (206; 306) and a second end (208; 308) opposite the first end,
a drive cartridge (100) having a cartridge tube (120), which is designed to be received in the drum tube (202; 302) in a torque-resistant manner, and a cover (134), which is rotatably mounted on a first shaft (108) and covers one end of the cartridge tube (120), wherein a drive unit (116) for exerting a conveying torque from the first shaft (108) onto the drum tube (202; 302) is arranged coaxially within the cartridge tube (120), in that a torque-resistant connection between the cartridge tube (120) and drum tube (202; 302) has or is formed by an interference fit between the external diameter of the cartridge tube (120) and the internal diameter of the drum tube (202; 302),
- wherein, at one end (104), the cartridge tube (120) has an insert cover (144), which is rotatably mounted on a second shaft (152) by means of a rolling-contact bearing, wherein the second shaft (152) has a recess (154) in the end face of the cartridge tube (120) to receive a stub axle (156; 222) in a torque-resistant manner, and
- optionally, a drum tube cover (210; 310), which is rotatably mounted on a third shaft (214) by means of a rolling-contact bearing, wherein the third shaft (214) is designed for the stub axle (156; 222; 320) to be led through, and
- optionally, an insert element (312), which is designed to be received in the drum tube (302) and is rotatably mounted on a fourth shaft (314) by means of a rolling-contact bearing, wherein the fourth shaft (314) is designed to receive the stub axle (320).

11. Modular system according to Claim 10,
- wherein, for the construction of a conveyor device of the smallest possible length, that drum tube which has a length which corresponds substantially to the length of the cartridge tube (120) is provided, and that stub axle (156) which, when assembled, is accommodated in the recess (154) in the second shaft (152) is provided,
- wherein, for the construction of a conveyor device (200) of medium length, at least the drum tube cover (210) is provided, wherein the stub axle (222), when assembled, is accommodated in the recess (154) in the second shaft (152) of the insert cover (144) and extends through the third shaft (212) and projects out of the drum tube cover (210), and/or
- wherein, for the construction of a conveyor device (300) of greater length, at least the drum tube cover (310) and the insert element (312) are provided, wherein the stub axle (320), when assembled, extends through the third shaft (212) of the drum tube cover (310) and projects into the fourth shaft (314) to be received.

12. Method for producing a conveyor device (200; 300), in particular a conveyor device according to one of the preceding claims, comprising the steps:
a) providing a drum tube (202; 302), which extends along a longitudinal axis (204; 304) and has a first end (206; 306) and a second end (208; 308) opposite the first end, wherein the drum tube (202; 302) is provided with a length depending on the desired length of the conveyor device (200; 300),
- providing a drive cartridge (100) having a cartridge tube (120), which is designed to be received torque-resistantly and coaxially in the drum tube (202; 302), in that a torque-resistant connection between the cartridge tube (120) and drum tube (202; 302) has or is formed by an interference fit between the external diameter of the cartridge tube (120) and the internal diameter of the drum tube (202; 302),
b) and a cover (134), which is rotatably mounted on a first shaft (108) and covers one end of the cartridge tube, and
c) inserting the cartridge tube (120) into the drum tube (202; 302) through the second end (208; 308) until the cover (134) strikes the second end (208; 308) of the drum tube (202; 302).

13. Method according to Claim 12, comprising the steps:
d) inserting an insert cover (144) into the cartridge tube (120) at one end (104), in particular before the insertion of the cartridge tube (120) into the drum tube, wherein the insert cover (144) is rotatably mounted on a second shaft (152) by means of a rolling-contact bearing, wherein the second shaft (152) has a recess (154) in one end face of the cartridge tube (120) to receive a stub axle (156), and
e) inserting the stub axle (156) into the recess (154) in the second shaft (152).

14. Method according to Claim 12, in which a drum tube cover (210) is mounted on a third shaft (212), wherein the third shaft (212) is designed for a stub axle (222) to be led through, comprising the steps:
f) inserting an insert cover (144) into the cartridge tube (120) at one end (104), in particular before the insertion of the cartridge tube (120) into the drum tube (202), wherein the insert cover (144) is rotatably mounted on a second shaft (152), wherein the second shaft (152) has a recess (154) in one end face of the cartridge tube (120) to receive the stub axle (222),
g) inserting the drum tube cover (210) into the drum tube (202) at the first end (206) of the drum tube (202),
h) leading the stub axle (222) through the third shaft (212), and
i) inserting the stub axle (222) into the recess (154) in the second shaft (152).

15. Method according to Claim 12, in which a drum tube cover (310) is mounted on a third shaft (212), wherein the third shaft (212) is designed for a stub axle (320) to be led through, comprising the steps:
j) inserting an insert element (312) into the drum tube, wherein the insert element (312) is rotatably mounted on a fourth shaft (314) and the fourth shaft (314) has a recess to receive the stub axle (320),
k) inserting the drum tube cover (310) into the drum tube (302) at the first end of the drum tube (306),
1) leading the stub axle (320) through the third shaft (212), and
m) inserting the stub axle (320) into the recess in the fourth shaft (314).

## Revendications

1. Dispositif de transport (200 ; 300) destiné à des installations de transport pour transporter des conteneurs, des palettes et similaires ou des produits en vrac, comprenant
- un rouleau tambour (202 ; 302) qui s'étend le long d'un axe longitudinal (204 ; 304) et présente une première extrémité (206 ; 306) et une deuxième extrémité (208 ; 308) opposée à la première extrémité, et
- une unité d'entraînement électrique (116) qui est réalisée pour exercer sur le rouleau tambour un couple de transport provenant d'un premier axe (108),
- une cartouche d'entraînement (100), comprenant
o un tube à cartouche (120) qui est fixé de manière solidaire en couple et coaxialement dans le rouleau tambour (202 ; 302), et
o un couvercle (134) qui est monté rotatif sur un premier axe (108) et recouvre une extrémité du tube à cartouche,
dans lequel l'unité d'entraînement électrique est disposée à l'intérieur du tube à cartouche, et le tube à cartouche est fixé coaxialement à l'intérieur du rouleau tambour,
**caractérisé en ce qu'**un assemblage solidaire en couple entre le tube à cartouche (120) et le rouleau tambour (202 ; 302) présente un ajustement par serrage entre le diamètre extérieur du tube à cartouche (120) et le diamètre intérieur du rouleau tambour (202 ; 302) ou est formé par celui-ci.

2. Dispositif de transport selon la revendication 1, **caractérisé en ce que** le couvercle (134) s'étend dans le tube à cartouche (120) et présente dans une partie de bride (124) en dehors du tube à cartouche un diamètre extérieur (126) qui correspond au diamètre extérieur du rouleau tambour (202 ; 302).

3. Dispositif de transport selon la revendication 1 ou 2, **caractérisé en ce que** l'assemblage solidaire en couple entre le tube à cartouche (120) et le rouleau tambour (202 ; 302) présente un assemblage collé.

4. Dispositif de transport selon l'une quelconque des revendications précédentes, **caractérisé en ce que** le tube à cartouche (120) présente à une extrémité (104) un couvercle rapporté (144) qui est monté rotatif sur un deuxième axe (152) au moyen d'un palier à roulement, le deuxième axe (152) présentant sur une face frontale du tube à cartouche (120) un évidement (154) pour recevoir un tourillon (156 ; 222).

5. Dispositif de transport selon la revendication 4, **caractérisé en ce que** le tube à cartouche (120) et le couvercle rapporté (144) s'étendent à travers le rouleau tambour de la première à la deuxième extrémité du rouleau tambour, et le tourillon (156) dépasse de la première extrémité du rouleau tambour.

6. Dispositif de transport selon l'une quelconque des revendications précédentes 1 à 4, **caractérisé en ce que** le rouleau tambour (202 ; 302) présente à la première extrémité (206 ; 306) un couvercle de rouleau tambour (210 ; 310) qui est monté rotatif sur un troisième axe (212) au moyen d'un palier à roulement, le troisième axe (212) étant réalisé pour le passage du tourillon (222 ; 320), et une extrémité du tourillon (222 ; 320) dépasse du couvercle de rouleau tambour (210 ; 310).

7. Dispositif de transport selon la revendication 6, **caractérisé en ce que** le tourillon (222 ; 320) s'étend à l'état monté à travers le troisième axe (212) et fait saillie dans celui-ci pour être reçu dans l'évidement (156) du deuxième axe (152).

8. Dispositif de transport selon la revendication 7, **caractérisé en ce que** le tourillon (222) présente dans une partie intermédiaire (224) entre le couvercle de rouleau tambour (210) et le couvercle rapporté (144) un diamètre qui empêche à l'état monté la réception de la partie intermédiaire (224) respectivement dans le deuxième (152) et/ou le troisième axe (212).

9. Dispositif de transport selon la revendication 6, comprenant un élément rapporté (312) qui est réalisé pour être reçu dans le rouleau tambour (302) et est monté rotatif sur un quatrième axe (314) au moyen d'un palier à roulement, le quatrième axe (314) étant réalisé pour recevoir le tourillon (320), et
dans lequel le tourillon (320) s'étend à l'état monté à travers le troisième axe (212) et fait saillie dans le quatrième axe (314).

10. Système modulaire pour la construction d'un dispositif de transport (200 ; 300) d'une longueur souhaitée, en particulier d'un dispositif de transport selon l'une quelconque des revendications précédentes, comprenant
- un rouleau tambour (202 ; 302) pouvant être fabriqué à une longueur souhaitée, pourvu d'une première extrémité (206 ; 306) et d'une deuxième extrémité (208 ; 308) opposée à la première extrémité,
une cartouche d'entraînement (100) pourvue d'un tube à cartouche (120) qui est réalisé pour être reçu de manière solidaire en couple dans le rouleau tambour (202 ; 302), et un couvercle (134) qui est monté rotatif sur un premier axe (108) et recouvre une extrémité du tube à cartouche (120), dans lequel une unité d'entraînement (116) est disposée coaxialement à l'intérieur du tube à cartouche (120) pour exercer sur le rouleau tambour (202 ; 302) un couple de transport provenant du premier axe (108) en ce qu'un assemblage solidaire en couple entre le tube à cartouche (120) et le rouleau tambour (202 ; 302) présente un ajustement par serrage entre le diamètre extérieur du tube à cartouche (120) et le diamètre intérieur du rouleau tambour (202 ; 302) ou est formé par celui-ci,
- dans lequel le tube à cartouche (120) présente à une extrémité (104) un couvercle rapporté (144) qui est monté rotatif sur un deuxième axe (152) au moyen d'un palier à roulement, le deuxième axe (152) présentant sur la face frontale du tube à cartouche (120) un évidement (154) pour recevoir de manière solidaire en couple un tourillon (156 ; 222), et
- en option un couvercle de rouleau tambour (210 ; 310) qui est monté rotatif sur un troisième axe (214) au moyen d'un palier à roulement, le troisième axe (214) étant réalisé pour le passage du tourillon (156 ; 222 ; 320), et
- en option un élément rapporté (312) qui est réalisé pour être reçu dans le rouleau tambour (302) et est monté rotatif sur un quatrième axe (314) au moyen d'un palier à roulement, le quatrième axe (314) étant réalisé pour recevoir le tourillon (320).

11. Système modulaire selon la revendication 10,
- dans lequel, pour la construction d'un dispositif de transport d'une longueur minimale, un rouleau tambour est prévu qui présente une longueur qui correspond substantiellement à la longueur du tube à cartouche (120), et un tourillon (156) est prévu qui, à l'état monté, est reçu dans l'évidement (154) du deuxième axe (152),
- dans lequel, pour la construction d'un dispositif de transport (200) de longueur moyenne, au moins le couvercle de rouleau tambour (210) est prévu, dans lequel le tourillon (222), à l'état monté, est reçu dans l'évidement (154) du deuxième axe (152) du couvercle rapporté (144) et s'étend à travers le troisième axe (212) et dépasse du couvercle de rouleau tambour (210), et/ou
- dans lequel, pour la construction d'un dispositif de transport (300) de grande longueur, au moins le couvercle de rouleau tambour (310) et l'élément rapporté (312) sont prévus, le tourillon (320), à l'état monté, s'étendant à travers le troisième axe (212) du couvercle de rouleau tambour (310) et faisant saillie dans celui-ci pour être reçu dans le quatrième axe (314).

12. Procédé de fabrication d'un dispositif de transport (200 ; 300), en particulier d'un dispositif de transport selon l'une quelconque des revendications précédentes, comprenant les étapes consistant à :
a) fournir un rouleau tambour (202 ; 302) qui s'étend le long d'un axe longitudinal (204 ; 304) et présente une première extrémité (206 ; 306) et une deuxième extrémité (208 ; 308) opposée à la première extrémité, le rouleau tambour (202 ; 302) étant fourni à une longueur en fonction de la longueur souhaitée pour le dispositif de transport (200 ; 300),
- fournir une cartouche d'entraînement (100) pourvue d'un tube à cartouche (120) qui est réalisé pour être reçu de manière solidaire en couple et coaxiale dans le rouleau tambour (202 ; 302) en ce qu'un assemblage solidaire en couple présente entre le tube à cartouche (120) et le rouleau tambour (202 ; 302) un ajustement par serrage entre le diamètre extérieur du tube à cartouche (120) et le diamètre intérieur du rouleau tambour (202 ; 302) ou est formé par celui-ci,
b) et un couvercle (134) qui est monté rotatif sur un premier axe (108) et recouvre une extrémité du tube à cartouche, et
c) introduire le tube à cartouche (120) dans le rouleau tambour (202 ; 302) à travers la deuxième extrémité (208 ; 308) jusqu'à ce que le couvercle (134) vienne en butée contre la deuxième extrémité (208 ; 308) du rouleau tambour (202 ; 302).

13. Procédé selon la revendication 12, comprenant les étapes consistant à :
d) introduire un couvercle rapporté (144) dans le tube à cartouche (120) à une extrémité (104), en particulier avant l'introduction du tube à cartouche (120) dans le rouleau tambour, le couvercle rapporté (144) étant monté rotatif sur un deuxième axe (152) au moyen d'un palier à roulement, le deuxième axe (152) présentant sur une face frontale du tube à cartouche (120) un évidement (154) pour recevoir un tourillon (156), et
e) introduire le tourillon (156) dans l'évidement (154) du deuxième axe (152).

14. Procédé selon la revendication 12, dans lequel un couvercle de rouleau tambour (210) est monté sur un troisième axe (212), le troisième axe (212) étant réalisé pour le passage d'un tourillon (222), comprenant les étapes consistant à :
f) introduire un couvercle rapporté (144) dans le tube à cartouche (120) à une extrémité (104), en particulier avant l'introduction du tube à cartouche (120) dans le rouleau tambour (202), le couvercle rapporté (144) étant monté rotatif sur un deuxième axe (152), le deuxième axe (152) présentant sur une face frontale du tube à cartouche (120) un évidement (154) pour recevoir le tourillon (222),
g) introduire le couvercle de rouleau tambour (210) dans le rouleau tambour (202) à la première extrémité (206) du rouleau tambour (202),
h) faire passer le tourillon (222) à travers le troisième axe (212), et
i) introduire le tourillon (222) dans l'évidement (154) du deuxième axe (152).

15. Procédé selon la revendication 12, dans lequel un couvercle de rouleau tambour (310) est monté sur un troisième axe (212), le troisième axe (212) étant réalisé pour le passage d'un tourillon (320), comprenant les étapes consistant à :
j) introduire un élément rapporté (312) dans le rouleau tambour, l'élément rapporté (312) étant monté rotatif sur un quatrième axe (314), et le quatrième axe (314) présentant un évidement pour recevoir le tourillon (320),
k) introduire le couvercle de rouleau tambour (310) dans le rouleau tambour (302) à la première extrémité du rouleau tambour (306),
l) faire passer le tourillon (320) à travers le troisième axe (212), et
m) introduire le tourillon (320) dans l'évidement du quatrième axe (314).
